# EUROPEAN PATENT APPLICATION

(11) **EP 4 837 755 A1**
(43) Date of publication of application: **11.11.2026**
(21) Application number: 26175259.6
(22) Date of filing: 28.04.2026
(51) Int. Cl.: B60G 17/015, B60G 11/27, B60G 17/052

(54) **VARIABLE-FLOW AIR VALVES FOR VEHICLE AIR SUSPENSION LEVELING**

(30) Priority: 07.05.2025 US 202519201336
(71) Applicant: Tesla, Inc., Austin, TX 78725 (US)
(72) Inventor: PITT, Julian, Austin, Texas 78725 (US); TOVSON, Kevin, Austin, Texas 78725 (US); CUSATO, Anthony, Austin, Texas 78725 (US)
(74) Representative: Bryn-Jacobsen, Caelia

(57) **Abstract**

An example vehicle air suspension system includes air springs, a compressor, an air reservoir, and a valve block with variable-flow air valves configured to control air flow between these components. The variable-flow air valves are adjustable discretely or variably to control the rate of air flow, thereby controlling the leveling rate of the vehicle during ride height adjustments. This approach enables smooth transitions at the beginning and end of leveling operations, reducing vertical jerk experienced by vehicle occupants. The system can maintain vehicle balance during leveling operations with uneven weight distribution without requiring discrete valve cycling. A controller may implement different leveling profiles based on various factors including vehicle speed, road conditions, location, load, and user requests.

## Description

### TECHNICAL FIELD

The present disclosures relate to vehicle suspension systems and, in some examples, to apparatus and methods for controlling air flow in air suspension systems using variable-flow air valves that can be adjusted discretely or variably to provide controlled ride height adjustment and improved occupant comfort.

### BACKGROUND

Air suspension systems are utilized in some vehicles to provide adjustable ride height capabilities. These systems typically comprise air springs, one or more compressors, and an air reservoir connected by a network of valves and air lines. Traditional air suspension systems employ on/off solenoid valves to control the flow of air between components, with air movement motivated by pressure differentials between these components.

When adjusting vehicle ride height, conventional systems open valves between components to allow air to flow, raising or lowering the vehicle.

However, these traditional on/off valve systems provide limited control over the rate of height adjustment. The abrupt transitions that occur at the beginning and end of leveling operations can result in noticeable vertical movements that may affect occupant comfort.

Vehicle loading conditions present additional challenges for air suspension systems. Uneven weight distribution across the vehicle can cause different corners to raise or lower at varying rates during height adjustments. Conventional systems must address this through intermittent valve cycling, which can create a discontinuous leveling experience.

### BRIEF DESCRIPTION OF THE DRAWINGS

Throughout the drawings, reference numbers may be re-used to indicate correspondence between referenced elements. The drawings are provided to illustrate examples of the subject matter described herein and not to limit the scope thereof.
**FIG. 1** is a system diagram illustrating an architecture of an electric vehicle (EV), according to some examples.
**FIG. 2** illustrates a detailed view of an air suspension system comprising multiple variable-flow air valves, according to some examples.
**FIG. 3** illustrates a graphical comparison of ride height adjustment profiles with and without variable flow control in an air suspension system, according to some examples.
**FIG. 4** illustrates examples operations in a method for controlling vehicle ride height in an air suspension system, according to some examples.

### DETAILED DESCRIPTION

Air suspension systems provide vehicles with adjustable ride height capabilities. These systems typically include multiple air springs, a compressor, and optionally an air reservoir. The components connect through a network of valves and air lines that control the movement of air throughout the system. As mentioned above, traditional air suspension systems utilize on/off solenoid valves that operate in a binary manner, either fully open or fully closed. When adjusting vehicle ride height, these conventional systems open valves between components to allow air flow motivated by pressure differentials. These traditional on/off valve systems provide limited control over the rate of height adjustment. The abrupt transitions that occur at the beginning and end of leveling operations can result in noticeable vertical movements that may affect occupant comfort.

Some described examples herein introduce variable-flow air valves that can be adjusted discretely or variably to control air flow between two or more components of an air suspension system. This approach allows direct control of the leveling rate by increasing or decreasing the air flow rate. In some examples, the variable-flow air valves enable a smooth S-shaped curve for ride height adjustment rather than the abrupt transitions that occur with typical on/off solenoid valves. As used herein, a 'variable-flow air valve' refers to a valve that can be adjusted to multiple distinct positions between fully closed and fully open to control the rate of air flow through the valve. In some examples, the variable-flow air valve includes mechanical components that can be positioned at different discrete or continuous positions to create different sized air flow paths through the valve, independent of the supply pressure for example. This is in contrast to conventional binary on/off solenoid valves that are limited to only fully open or fully closed positions. In some examples, the variable-flow air valves described herein achieve variable flow rates by adjusting a physical parameter such as a valve opening size or other parameter.. In some examples, the variable-flow air valves may operate through proportional variable current, voltage or power control as described more fully below.

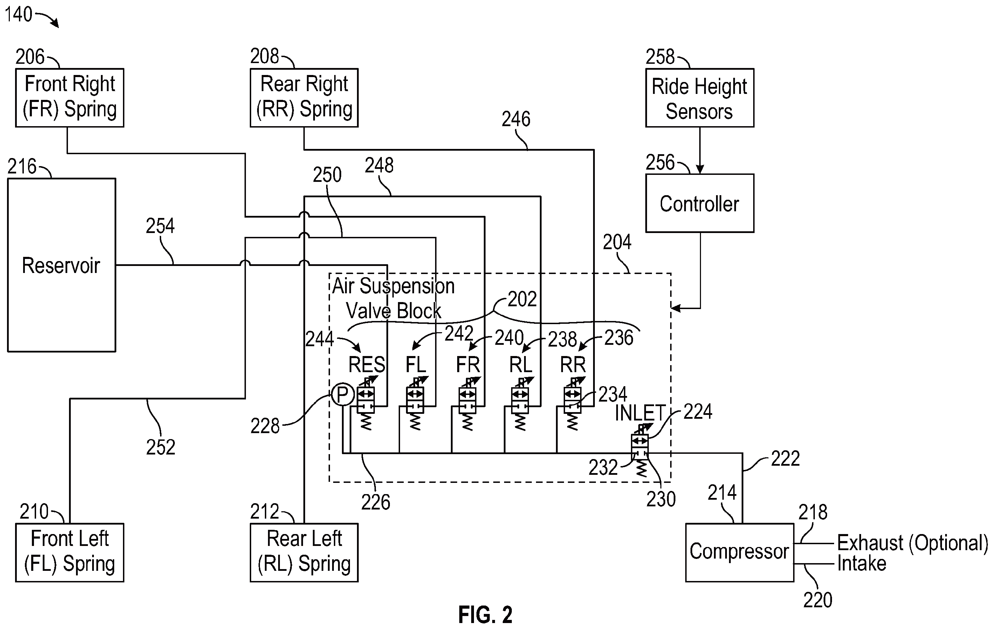

Some examples herein may be said to operate in an "open" air suspension system that vents air to atmosphere when the vehicle is lowered, for example by opening one or more variable-flow air valves. Some examples operate in a "closed" air suspension system that for examples may lower a vehicle by using a compressor to pump air from air suspension springs back into an air reservoir. An example compressor has reversing valves and can pump in both directions. In a closed air suspension system, the compressor may be placed between the reservoir and a valve block, as opposed to an example open air suspension system described further below with reference to **FIG. 2****.**

In some examples, a suspension system layout includes front and rear air springs connected to a valve block, compressor, and reservoir. Within the valve block, proportional flow valves control air movement between these components. The valves can be implemented as proportional, variable, or current-controlled valves applied to valve blocks, air suspension compressors, or both.

When a vehicle initiates a leveling operation, the variable-flow air valves open to create air flow paths between system components. The position of these valves adjusts during the operation to control the rate of air flow. In some examples, as the vehicle approaches the target ride height, the valves further adjust to reduce the flow rate, slowing the leveling process.

This variable flow control addresses several challenges present in conventional systems. The technology allows flexibility in air suspension leveling balance from front to rear and side to side. It enables control over leveling rate, allowing the system to level quickly or slowly based on different scenarios. The approach increases accuracy and repeatability in leveling operations by slowing down near the target ride height. The described examples also seek to improve occupant comfort by reducing vertical "jerk" experienced at the beginning and end of leveling operations. The smooth transitions eliminate the abrupt movements that occur with on/off solenoid systems.

In some examples, the variable flow control may be beneficial when managing uneven weight distribution across the vehicle. For instance, when a vehicle carries heavy cargo in the rear, conventional systems must cycle valves on and off periodically to maintain vehicle balance during leveling. This can create a "staggered leveling" effect where the vehicle ride height changes in a noticeable stepwise fashion. The use of variable-flow air valves in some examples of this disclosure seek to eliminate this issue by allowing continuous adjustment of flow rates to different air springs, maintaining vehicle balance without discrete or stepwise changes.

In some examples herein, a vehicle suspension control system can implement different leveling profiles based on various factors including vehicle speed, road roughness, location, load conditions, and direct user requests. For example, when a user directly requests a ride height change, the system can operate more responsively to demonstrate that the adjustment is occurring. In contrast, automatic adjustments can proceed more subtly. In some examples, the vehicle suspension control system can also optimize vehicle performance during high-acceleration events like launch mode or "cheetah" mode by precisely controlling air flow rates through the variable-flow air valves to maintain optimal vehicle balance and stability. Additionally, the system can adapt ride height and suspension characteristics in real-time when encountering challenging terrain conditions such as snow or mud, allowing the vehicle to maintain traction and stability while traversing these surfaces. The variable-flow air valves enable smooth transitions between different ride heights even during these performance-oriented adjustments, maintaining occupant comfort while seeking to maximize vehicle capability.

In some examples, the variable-flow air valves may operate through proportional variable current control. The amount of current supplied to the valve determines its position and consequently the flow rate. The valves potentially require less current to maintain a partially open state compared to a fully open state, which may offer efficiency improvements over conventional systems. In some examples herein, the variable-flow air valves may operate through proportional variable electrical power control. The amount of power supplied to the valve determines its position and consequently the flow rate. The valves potentially require less power to maintain a partially open state compared to a fully open state, which may offer efficiency improvements over conventional systems. This power-based control approach allows for optimization of both voltage and current parameters to achieve efficient valve operation while maintaining precise flow control capabilities. The variable-flow air valves can be designed to minimize power consumption while still providing the desired level of flow control, seeking to improve overall system efficiency compared to conventional binary solenoid valve systems.

A further technical challenge in implementing this technology involves designing valve architecture that efficiently uses current and takes advantage of pneumatic flow to balance itself. Some examples seek to minimize the current needed to hold one or more variable-flow air valves at the "correct" or designated position when there is a detected pressure differential across the one or more variable-flow air valves. In some examples herein, the variable-flow air valves may operate through proportional variable electrical power control. The amount of power consumed by the valve can determines its position and consequently the flow rate. The valves potentially require less power to maintain a partially open state compared to a fully open state, which may offer efficiency improvements over conventional systems. In some examples, this power control and/or power optimization applies across different vehicle electrical architectures, including for example 12V and 48V systems, where the valve control system can adjust voltage and/or current parameters to achieve the desired flow control while minimizing overall power consumption. In some examples, the variable-flow air valves are configured to operate efficiently across different voltage architectures while maintaining precise control over valve position and air flow rates. In some examples, a variable-flow air valve may be commanded by a serial or analog signal to modify or command its position as opposed to directly supply a control current or voltage to directly actuate it.

Example performance metrics for an air suspension system may include leveling acceleration (the rate of changes in ride height), total adjustment speed, and total adjustment accuracy. A smooth acceleration profile directly affects what forces an occupant may feel during ride height adjustments.

Some examples herein can be implemented with various valve technologies, including proportional valves, variable valves, or current-controlled valves. These may be applied to valve blocks, air suspension compressors, or both depending on the specific implementation requirements.

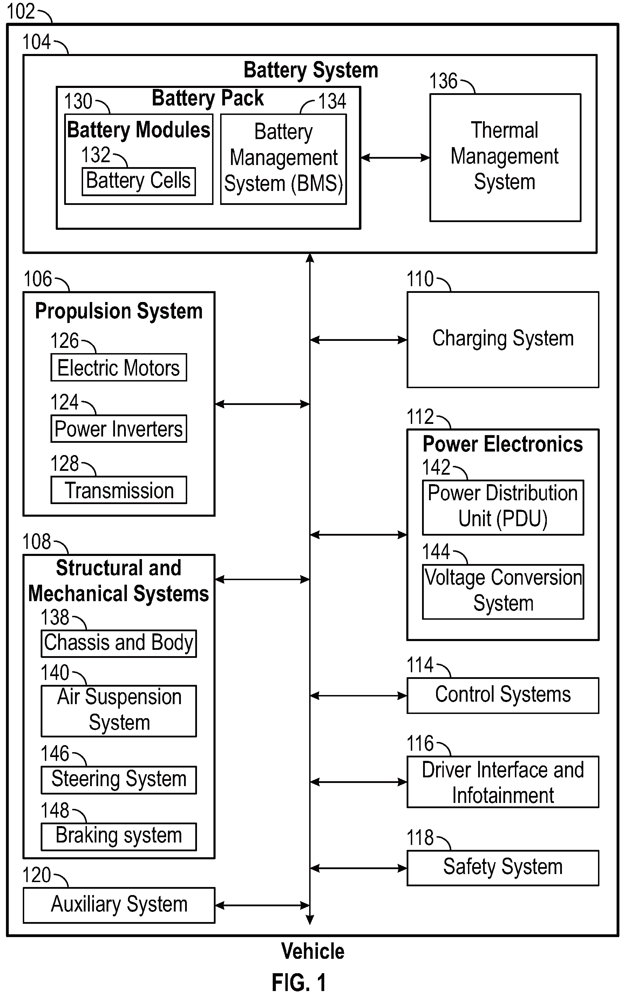

**FIG. 1** is a system diagram illustrating an architecture of an electric vehicle (EV) 102, according to some examples. This diagram shows systems and sub-systems that collectively enable the functionality and operational efficiency of the electric vehicle 102.

The electric vehicle 102 includes a number of higher-level systems which are interconnected, including a battery system 104, a propulsion system 106, structural and mechanical systems 108, a charging system 110, power electronics 112, control systems 114, driver interface and infotainment 116, safety systems 118, and auxiliary systems 120.

The propulsion system 106 includes one or more electric motors 126, which may include traction motors for propulsion and motors for regenerative braking systems, convert electrical energy into mechanical energy. Power inverters 124 facilitate the conversion of DC power from the battery to AC power required by the electric motors 126. The propulsion system 106 also includes a transmission 128, which may consist of a single-speed transmission or gearbox, channeling mechanical power to the wheels of the electric vehicle 102.

The battery system 104 is composed of several battery modules 130, each housing multiple battery cells 132. These battery cells 132 may be based on various chemistries, including lithium-ion, lithium-polymer, or solid-state materials, each offering distinct benefits in terms of energy density, recharge cycles, and safety profiles.

A battery management system (BMS) 134 continuously monitors various parameters, such as voltage, current, and temperature of each of the battery cells 132 and battery modules 130 to prevent conditions that could lead to overcharging, deep discharging, or thermal runaway. The battery management system (BMS) 134 also manages the state of charge (SoC) and state of health (SoH) of the battery, ensuring that the energy is distributed during discharge and that the charging process is optimized for longevity and safety. Each battery management system (BMS) 134 employs algorithms to balance the charge across the cells and modules, correcting imbalances that can reduce the battery's overall capacity and lifespan.

Integrated with the battery system 104 is a thermal management system 136, which operatively maintains the battery cells 132 within specified temperature ranges. The thermal management system 136 employs temperature sensors to monitor the heat generated by the battery cells 132 during operation. Based on the data collected, it activates cooling and heating mechanisms to regulate the battery's temperature. Cooling methods can include air cooling, where ambient air is circulated around the battery modules 130, or liquid cooling, where a coolant is circulated through channels in or around the battery modules 130 to absorb and dissipate heat. In colder environments, the thermal management system 136 may employ heating elements or use waste heat from the vehicle's systems to warm the battery cells 132, ensuring they operate efficiently even in low temperatures.

The charging system 110 operatively replenishes the stored energy within the battery system 104 of the electric vehicle 102. It supports various charging methodologies to ensure flexibility and convenience in energy restoration. The charging system 110 may encompass systems for both standard (Level 1 and Level 2) and fast charging (DC fast charging), facilitating a range of charging speeds to suit different user needs and infrastructure capabilities.

For standard charging, the charging system 110 includes an onboard charger for AC/DC conversion. This onboard charger converts the alternating current (AC) from the electrical grid or home outlets into direct current (DC) that can be stored in the vehicle's battery system 104. The onboard charger may, for example support Level 1 and Level 2 charging, with Level 1 charging using standard household outlets (108-120V) and Level 2 charging requiring a higher voltage source (208-240V), such as those found in dedicated charging stations or installed in residential garages.

For fast charging, the charging system 110 may incorporate a DC fast charging system, designed for rapid energy transfer directly to the vehicle's battery system 104, bypassing the onboard charger. DC fast charging stations supply high-voltage (e.g., 400V to 800V) direct current directly to the battery system 104.

Additionally, the electric vehicle 102 may be equipped with an auxiliary battery, such as a 12V lead-acid or lithium-ion battery may be tasked with powering the vehicle's low-voltage systems, including lighting, infotainment, electronic control units, and other ancillary components, ensuring their operation even when the main battery system is off or during the initial stages of charging when the main system's voltage might be too low for these tasks. This separation of power sources enhances the vehicle's electrical system reliability and ensures the availability of essential functions.

Structural and mechanical systems 108, including a chassis and body 138 and air suspension system 140, provide the physical framework and support for the electric vehicle 102. The chassis and body 138 constitute the vehicle's primary structure, while the air suspension system 140, which may include springs, shock absorbers (or dampers), and control arms, provides a smooth and stable ride by mitigating road shocks and vibrations.

Power electronics 112, including a power distribution unit (PDU) 142 and a voltage conversion system 144, are responsible for the management and conversion of electrical power within the electric vehicle 102. The power distribution unit (PDU) 142, equipped with fuses and relays, distributes power to various vehicle systems, while voltage conversion devices of the voltage conversion system 144, such as DC/DC and AC/DC converters, adjust the voltage levels to meet the specific requirements of different components.

Control systems 114 facilitate the driver's command over the electric vehicle 102, with a steering system 146 and a braking system 148 as examples. The steering system 146, including a power steering motor, allows for precise directional control, whereas the braking system 148, which may feature disc brakes and an anti-lock braking system (ABS), enables deceleration and stopping.

The driver interface and infotainment 116 supports the driving experience by providing vehicle information and entertainment options through digital displays and multimedia systems. Connectivity features, such as Bluetooth and USB, further augment functionality.

Safety systems 118, designed to protect the vehicle's occupants, may include airbag systems and advanced driver-assistance systems (ADAS), for example. ADAS may use an array of sensors, cameras, radar, LiDAR, and/or ultrasonic devices to monitor the vehicle's surroundings, detect potential hazards, and execute or suggest corrective actions to prevent accidents and mitigate their impact.

ADAS can be categorized into different levels of self-driving capabilities, ranging from Level 0, where the human driver performs all driving tasks, to Level 5, which represents full automation with no human intervention required under any circumstances. Levels 1 and 2 focus on driver assistance and partial automation, respectively, where systems such as adaptive cruise control, lane-keeping assistance, and automatic emergency braking support the driver but do not replace them. Level 3, conditional automation, allows the vehicle to manage all aspects of driving in certain conditions, but requires the driver to be ready to take control when needed. Level 4, high automation, enables the vehicle to operate independently in most scenarios, though human override is still possible.

Examples of ADAS that contribute to these levels of automation include, but are not limited to, adaptive cruise control, which adjusts the vehicle's speed to maintain a safe distance from vehicles ahead; lane departure warning systems, which alert the driver when the vehicle begins to drift out of its lane; and automatic parking systems, which assist or take over control of the vehicle during parking maneuvers. More advanced systems, contributing to higher levels of automation, involve complex algorithms and machine learning capabilities to interpret sensor data, predict actions of other road users, and make real-time driving decisions.

Auxiliary systems 120 support the vehicle's functions and occupant comfort, with climate control and lighting systems as examples. The auxiliary systems 120 may also include windshield wipers etc.

As noted above, the systems of the electric vehicle 102 are communicatively connected. Communications between the interconnected systems within the electric vehicle 102 are facilitated through a vehicle network architecture, employing both hardware and software components to ensure seamless data exchange and coordination. This network architecture may include one or more vehicle communication buses, such as for example Controller Area Network (CAN), Local Interconnect Network (LIN), FlexRay, and Ethernet, which serve as the backbone for intra-vehicle communications.

The Controller Area Network (CAN) bus is a vehicle bus standard designed to allow microcontrollers and devices to communicate with each other within the electric vehicle 102 without a host computer. Such a network may support control communications between systems such as the battery system 104, propulsion system 106, and control systems 114, due to its high reliability and resistance to interference. A CAN bus may support messages that ensure real-time control and monitoring of these systems.

For other communications, such as those involving the driver interface and infotainment 116 or auxiliary systems 120, a Local Interconnect Network (LIN) bus may be employed. LIN may provide a cost-effective, low-speed serial communication system for connecting intelligent sensors and actuaries. It may serve as a sub-network to the CAN bus, handling signals such as switch inputs and actuator outputs.

FlexRay technology offers a higher data rate compared to CAN and LIN, providing the necessary bandwidth for advanced control systems, including those required for autonomous driving functionalities within safety systems 118. Its deterministic nature and fault tolerance make it suitable for applications that require precise timing and synchronization, such as coordinating the actions of multiple control units in real-time.

Ethernet, with its high data transfer rate, may for example be adopted for diagnostics and infotainment applications within the electric vehicle 102. It supports the rapid transfer of large volumes of data, making it well suited for advanced driver assistance systems (ADAS), software updates, and multimedia streaming in the driver interface and infotainment 116 system.

Software protocols and application programming interfaces (APIs) built on top of these physical layers enable high-level communication and data exchange between systems. These protocols may define the rules for data format, timing, and error handling, ensuring that messages are correctly interpreted and acted upon by the receiving systems. Some examples herein incorporate aspects of a so-called octovalve, for example, as described and illustrated in U.S. Patent No. 11,932,078.. For example, the octovalve described in U.S. Patent No. 11,932,078 may be supplemented or replaced with the disclosed variable-flow valve technology to improve heating or cooling system efficiencies.

**FIG. 2** shows various components in an example air suspension system 140. In some examples, the air suspension system 140 comprises one or more variable-flow air valves 202 in an air suspension valve block 204. A variable-flow air valve 202 may also be known as a proportional flow air valve in some examples. The variable-flow air valves 202 may include any one or more of a first variable-flow air valve 224, a rear right variable-flow air valve 236, a rear left variable-flow air valve 238, a front right variable-flow air valve 240, a front left variable-flow air valve 242, and a reservoir variable-flow air valve 244, described further below.

The air suspension system 140 further comprises multiple air springs to support the electric vehicle 102 over the ground, in this case four air springs positioned at different locations on the electric vehicle 102, such as a front right air spring 206, a rear right air spring 208, a front left air spring 210, and a rear left air spring 212. The air suspension system 140 further comprises a compressor 214 and, in some examples, an air reservoir 216.

The compressor 214 comprises an exhaust 218 and an intake 220 and is connected by a pressure line 222 to the inlet 230 of the first variable-flow air valve 224 in the valve block 204. The first variable-flow air valve 224 acts as an inlet valve for the valve block 204 to admit pressurized air in a controlled fashion air from the compressor 214 for use in the air suspension system 140. The first variable-flow air valve 224 is controllable to maintain a pressure in the valve block 204 at a pressure (P) 228 using air received from the compressor 214.

The outlet 232 of the first variable-flow air valve 224 is connected to an air supply line 226 also known as a valve block gallery that acts like a "bus" or common air supply for several downstream variable-flow air valves 202 in the valve block 204. The air supply line 226 supplies air at pressure (P) 228 to the inlet 234 of the rear right variable-flow air valve 236 and, in similar manner, to the inlets of a series of variable-flow air valves 202 in the valve block 204 including the rear left variable-flow air valve 238, the front right variable-flow air valve 240, the front left variable-flow air valve 242, and the reservoir variable-flow air valve 244, as shown.

The rear right variable-flow air valve 236, the rear left variable-flow air valve 238, the front right variable-flow air valve 240 and the front left variable-flow air valve 242 control air flow, or more specifically air pressure in some examples, to support or adjust the rear right air spring 208, the rear left air spring 212, the front right air spring 206, and the front left air spring 210. In some examples, this air flow or pressure control is effected via a rear right air supply line 246, a rear left air supply line 248, a front right air supply line 250, and a front left air supply line 252, respectively. The reservoir variable-flow air valve 244 supplies air to and from the air reservoir 216 via a reservoir air supply line 254.

The various components of the air suspension system 140, including the variable-flow air valves 202, are controlled by a controller 256. The controller 256 receives input from a user (such as a vehicle driver or occupant), and/or from one or more ride height sensors 258 of the electric vehicle 102 to control the air suspension system 140 to raise, lower, level, tilt, or rebalance the electric vehicle 102. In some examples, the controller 256 may receive many other inputs from other controllers or sensors on the vehicle, for example, a vehicle speed sensor to help choose a ride height, or an open door or trunk signal to pause vehicle leveling, and so forth. Other sensors or signals may be based on a road surface or a geolocation. Other sensors and signals are possible, for example as discussed further below.

In some examples, to adjust the ride height of the electric vehicle 102 based on a user selection or input received from one or more of the ride height sensors 258, the controller 256 may identify one or more of the variable-flow air valves 202 located between two or more components of the air suspension system 140 that can be operated to bring about the required ride height adjustment. In some cases, all four of the variable-flow air valves 202 supplying air to and regulating the four air springs may be implicated in bringing about a ride adjustment, such as a raising, lowering, leveling, tilting, or rebalancing of the vehicle 102.

Under instruction of the controller 256, a valve position of the identified variable-flow air valve 202 (or more or all of them) can be adjusted accordingly. An air flow between the two or more components is motivated by a pressure differential between these components. For example, higher-pressure air may be directed to flow from the air reservoir 216 to all four of the air springs (including the front right air spring 206, the rear right air spring 208, the front left air spring 210, and the rear left air spring 212) to lift the electric vehicle 102 in its entirety and increase overall ride height. In some cases, air can be released (or rebalanced) by a variable-flow air valve 202 from an air spring to lower, level, or rebalance a corresponding side or end of the electric vehicle 102.

The variable-flow air valves 202 can be adjusted discretely or variably to control air flow between two or more components of the air suspension system 140 to allow direct control of leveling rate by increasing or decreasing the air flow rate. This allows flexibility in air suspension leveling balance (for example, front to rear, or side to side), leveling rate (leveling quickly or slowly), and increases accuracy and repeatability in leveling operation.

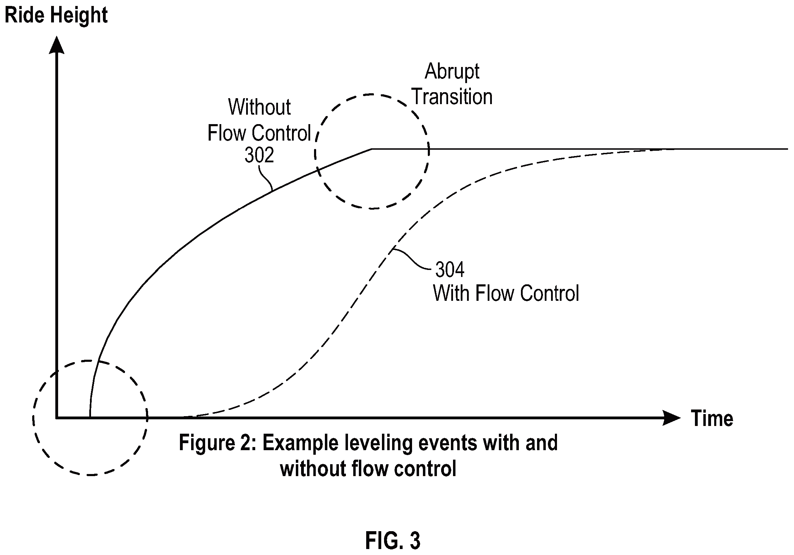

In some examples, the controllable characteristics of the variable-flow air valves 202 (as opposed to a conventional on-off solenoid type operation) enables a slowing down or deceleration in ride height adjustment near the target ride height, or a slow departure or adjustment in ride height when leaving an original or current ride height. Some examples of a ride height adjustment may thus include "slower" beginning and end height adjustment portions, and a "faster" mid-zone height adjustment portion in which the ride height is accelerated or adjusted more quickly. In addition, because the beginning or the end of a ride height adjustment or leveling operation can be slowed down, the vehicle occupant experiences less vertical jerk and may enjoy a smoother vehicle ride. Further examples in this regard are described further below with reference to **FIG. 3****.**

In some examples, the discrete or variable flow control enabled by the variable-flow air valves 202 can be beneficial when managing uneven weight distribution across the electric vehicle 102. For instance, when the electric vehicle 102 carries heavy cargo in the rear, conventional systems must cycle valves on and off periodically to maintain vehicle balance during leveling. This can create a "staggered leveling" effect where the vehicle ride height changes in a noticeable stepwise fashion. In some present examples, the controller 256 can operate the variable-flow air valves 202 in non-binary fashion to substantially eliminate this issue by allowing continuous and smooth adjustment of flow rates to different air springs, maintaining vehicle balance without discrete or stepwise changes.

In some further examples herein, the controller 256 of the air suspension system 140 can implement different leveling profiles based on various factors including vehicle speed, road roughness, location, load conditions, and direct user requests. For example, when a user directly requests a ride height change, the system can operate more responsively to demonstrate that the adjustment is occurring. In contrast, automatic adjustments can proceed more subtly.

In some examples, the variable-flow air valves 202 may operate through proportional variable electrical current control. The amount of current supplied to a given variable-flow air valve 202 determines its position and consequently the flow rate permitted by the variable-flow air valve 202, in some examples. In some examples, the variable-flow air valves 202 require less current to maintain a partially open state compared to a fully open state, seeking to offer efficiency improvements over conventional solenoid-controlled systems that are either fully open or fully closed. Moreover, some examples herein seek to use this valve-controlling current efficiently and take advantage of pneumatic flow between the components of the air suspension system 140 to balance themselves. For example, some example configurations of variable-flow air valves 202 that are in balance (or at rest) can minimize the current needed to hold the variable-flow air valves 202 at a desired or designated position when there is a balanced pressure differential across them. In some examples herein, the variable-flow air valves may be controlled through various control signals and mechanisms. A level, amount, degree, or type of control signal, which may include electrical current, voltage, digital signals, or other control inputs, may determine the valve position and consequently the air flow rate, in some examples. In some further examples, various configurations of valves can be designed to respond to different types of control signals while maintaining precise control over the air flow rate. This flexible control approach may allow for optimization of valve operation across different vehicle electrical architectures and control systems, potentially improving overall system efficiency compared to conventional binary solenoid valve systems. The variable-flow air valves can be implemented using various control technologies that enable discrete or continuous position control while maintaining the ability to precisely regulate air flow rates between system components.

Example performance metrics for an air suspension system may include leveling acceleration (the rate of changes in ride height), total adjustment speed, and total adjustment accuracy. A smooth acceleration profile directly affects what forces an occupant may experience or "feel" during ride height adjustments. Some examples herein can be implemented with various valve technologies, including proportional valves, variable valves, or current-controlled valves. These may be applied to valve blocks, air suspension compressors, or both depending on the specific implementation requirements.

In some examples, the air suspension system 140 can adjust ride height based on integrated sensor data from multiple vehicle systems. For example, the system or controller 256 may utilize data from the vehicle's safety systems and advanced driver-assistance systems (ADAS) to proactively adjust ride height. By processing input from cameras, radar, LiDAR, and ultrasonic sensors, the controller can detect upcoming road conditions or obstacles and adjust vehicle height accordingly for improved clearance or aerodynamics.

In some examples, individual ADAS features can trigger ride height adjustments through the air suspension system. Vehicle safety systems, which may include ADAS capabilities ranging from Level 0 to Level 5 automation, can integrate with the air suspension system in several specific ways. For automatic parking systems, the controller 256 can adjust ride height to optimize vehicle positioning during parking maneuvers. This may include lowering the vehicle for better stability and precision during tight parking operations, particularly when the ADAS sensors are actively guiding the parking process. In some examples herein, based on sensor or other input, the suspension system or controller can determine the height of surfaces relative to the vehicle, such as curbs, sidewalks, or other obstacles, and adjust the ride height accordingly. For example, when approaching a known driveway entrance or detecting a high curb near a vehicle door, the system can proactively raise the suspension to provide adequate clearance and prevent scraping. The variable-flow air valves enable smooth transitions to these increased ride heights while maintaining vehicle stability and occupant comfort. This capability may be particularly valuable when navigating urban environments with varying surface heights or when passengers are entering or exiting the vehicle near curbs. The system may store location data for frequently encountered obstacles and automatically initiate ride height adjustments when approaching these locations. Additionally, the system can use input from various vehicle sensors to detect and measure the height of surfaces in real-time, allowing for dynamic ride height adjustments to maintain appropriate ground clearance.

In further examples, when lane keeping assistance is active, the air suspension system 140 can process data from cameras and sensors monitoring lane position through the vehicle's Ethernet network. If the sensors detect rough road conditions or obstacles within the current lane that require additional ground clearance, the variable-flow air valves can smoothly adjust the ride height while maintaining vehicle balance.

In some examples, during adaptive cruise control operation, the suspension system can receive real-time data about following distances and relative speeds through the CAN bus. This allows the controller to optimize ride height for aerodynamics at highway speeds while maintaining the capability to quickly adjust ground clearance if road conditions change.

In some examples, the integration with these ADAS features is enabled by the vehicle's network architecture, which allows the suspension controller to receive and process sensor data through both CAN and Ethernet communications. The variable-flow air valves can then implement appropriate leveling profiles based on the specific ADAS feature that is active and its current operational status.

The thermal management system's temperature sensors can provide data about battery and powertrain thermal conditions that may affect vehicle weight distribution. In some examples, the controller 256 can use this information to make compensatory ride height adjustments, particularly during high-performance driving or charging scenarios when thermal loads may be elevated.

In some examples, power electronics and propulsion systems of the vehicle can provide torque and power delivery data that indicates dynamic weight transfer during acceleration and braking. In some examples, the variable-flow air valves 202 can be adjusted in real-time to optimize ride height and vehicle balance based on these dynamic loads.

In some examples, integration with the vehicle's geolocation capabilities allows the system to automatically adjust ride height based on saved location data. For example, the air suspension system can learn and remember locations where increased ground clearance is typically needed, such as steep driveways or speed bumps, and proactively adjust the suspension when approaching these locations.

In some examples, the controller 256 can also process data from structural and mechanical sensors monitoring chassis flex and body motion to detect scenarios requiring ride height adjustment. This may include compensating for aerodynamic effects at high speeds or adjusting for cargo loading changes that affect vehicle dynamics.

**In** some examples, these sensor-based adjustments utilize the variable-flow air valves' ability to provide smooth, controlled transitions between ride heights while maintaining vehicle balance. The controller 256 can implement different adjustment profiles based on the urgency and nature of the sensor inputs, from subtle automatic adjustments to more responsive changes when immediate action is required.

**In** some examples, the air suspension system can leverage the vehicle's network architecture to receive real-time data signals through both Controller Area Network (CAN) and Ethernet communications for intelligent ride height adjustment. The CAN bus enables direct communication between the suspension controller and critical vehicle systems like the propulsion system, braking system, and steering system, allowing real-time coordination of ride height adjustments based on vehicle dynamics.

For example, the CAN bus facilitates high-reliability communications between the air suspension system and other vehicle control systems, enabling the variable-flow air valves to respond to real-time signals about vehicle speed, braking status, and steering inputs. This integration allows for fine or precise suspension adjustments that maintain vehicle balance during dynamic driving conditions.

In some examples, a vehicle's Ethernet network, with its higher bandwidth capabilities, enables the air suspension system to process more complex data streams from advanced driver assistance systems (ADAS) and safety systems. This high-speed communication allows the controller to analyze rich sensor data from cameras, radar, and LiDAR systems to proactively adjust ride height based on detected road conditions and obstacles.

The integration with these vehicle communication networks also enables sophisticated diagnostic capabilities. The air suspension system can transmit detailed valve position data, pressure readings, and ride height sensor information across the vehicle network architecture, allowing for precise monitoring and adjustment of the suspension system's performance.

The controller can process these network signals to implement different leveling profiles based on various operational parameters. For instance, when the CAN bus indicates high-speed operation, the system may automatically lower the vehicle to optimize aerodynamics. Similarly, when ADAS sensors detect rough road conditions through the Ethernet network, the controller can adjust the variable-flow air valves to increase ground clearance while maintaining smooth transitions between ride heights.

**FIG. 3** illustrates a graphical comparison of ride height adjustment profiles with and without variable flow control in an air suspension system. The graph plots ride height (vertical axis) against time (horizontal axis), demonstrating two distinct adjustment curves: a conventional curve 302 without air flow control and an improved S-shaped curve 304 with flow control implemented using the variable-flow air valves described herein.

The conventional curve 302 exhibits abrupt transitions at both the beginning and end of the leveling operation. These transitions, highlighted by dashed circles in the figure, represent points where vehicle occupants may experience noticeable vertical jerk or sudden acceleration changes. At the beginning of the adjustment, the conventional system rapidly initiates height change with minimal ramp-up period. Similarly, at the end of the adjustment, the conventional system abruptly reaches the target ride height, creating another sudden transition that can be felt by vehicle occupants.

In contrast, the S-shaped curve 304 enabled by the variable-flow air valves 202 demonstrates a more controlled and comfortable ride height adjustment process that can be characterized by three distinct phases in some examples: an initial slow phase, a middle fast phase, and a final slow phase.

During the initial slow phase, the controller 256 operates the variable-flow air valves 202 at a partially open position to allow a gradual initiation of the ride height adjustment. This controlled departure from the original ride height reduces the initial vertical acceleration experienced by vehicle occupants, substantially eliminating the abrupt transition present in conventional systems. The controller 256 may receive input from the ride height sensors 258 to precisely monitor the initial departure from the original ride height and adjust the valve positions accordingly.

As the adjustment progresses into the middle fast phase, the controller 256 increases the opening of the relevant variable-flow air valves 202, allowing increased air flow between components of the air suspension system 140. This increased flow rate accelerates the ride height adjustment during the middle portion of the operation, optimizing the overall adjustment time while maintaining comfort. During this phase, air may flow at higher rates between the air reservoir 216 and the air springs (206, 208, 210, 212) through their respective variable-flow air valves (240, 236, 238, 242). The controller 256 may implement air pressure regulation from time to time from the air reservoir 216 using the reservoir variable-flow air valve 244, and/or from the compressor 214 using the first variable-flow air valve 224.

Upon approaching the target ride height as detected by the ride height sensors 258, the controller 256 initiates the final slow phase by gradually reducing the opening of the variable-flow air valves 202. This controlled deceleration creates a smooth transition to the target ride height, eliminating the abrupt stop evident in conventional systems. The gradual reduction in air flow rate allows the vehicle to settle gently into the target position, significantly improving occupant comfort by minimizing vertical jerk at the conclusion of the adjustment.

The S-shaped adjustment curve 304 provides several technical advantages beyond occupant comfort. The controlled approach to the target ride height increases leveling accuracy and repeatability by allowing fine adjustments as the vehicle nears its target position. This precision is particularly valuable in scenarios requiring exact ride height positioning, such as when connecting to charging equipment or navigating specific terrain conditions.

The variable-flow control is especially beneficial in handling uneven weight distribution across the electric vehicle 102. For example, when the electric vehicle 102 carries heavy cargo in the rear, conventional systems must cycle valves on and off periodically to maintain vehicle balance during leveling, creating a "staggered leveling" effect with noticeable stepwise changes. With the variable-flow air valves 202, the controller 256 can continuously and independently adjust the flow rates to each air spring, maintaining vehicle balance throughout the entire leveling operation without discrete changes. This capability allows, for instance, the rear air springs (208, 212) to receive air at different rates than the front air springs (206, 210) during a raising operation, ensuring the electric vehicle 102 remains level while adjusting height. In some examples, the controller implements closed-loop control of the ride height using feedback from the ride height sensors at each corner of the vehicle. The controller can set target height values for each corner independently and use proportional-integral-derivative (PID) control algorithms to smoothly transition each corner to its target height. The PID controller receives continuous feedback from the ride height sensors and adjusts the variable-flow valve positions accordingly to achieve and maintain the desired height at each corner.

In some examples, the controller implements independent closed-loop PID control for each corner of the vehicle to achieve the desired S-shaped ride height adjustment curve. The controller receives continuous feedback from ride height sensors at each corner and adjusts the corresponding variable-flow valve positions using PID control algorithms with dynamically modified gains.

During the initial slow phase of the S-curve, the controller can employ reduced proportional and derivative gains to limit the rate of height change and minimize initial jerk. As the adjustment progresses into the middle fast phase, the controller increases these gains to allow more rapid height adjustment while maintaining vehicle balance. Upon approaching the target height during the final slow phase, the gains are again reduced to enable precise positioning with minimal overshoot.

For example, when raising the vehicle, the controller may use:
Initial phase: Low proportional gain (Kp) and derivative gain (Kd) values to start movement gradually
Middle phase: Higher Kp and Kd values to increase adjustment speed
Final phase: Reduced gains with increased integral gain (Ki) for precise settling at target height

The independent PID loops for each corner allow the controller to compensate for uneven weight distribution. If the rear of the vehicle is heavily loaded, the controller can provide higher flow rates to the rear air springs by adjusting the PID parameters for those corners, while maintaining lower flow rates to the front springs. This coordinated control maintains vehicle attitude throughout the height adjustment without requiring discrete valve cycling.

The controller continuously monitors the height sensor feedback to adjust the PID gains in real-time, ensuring smooth transitions between phases while maintaining vehicle stability and occupant comfort. This adaptive gain scheduling enables the characteristic S-shaped adjustment curve while providing precise control over vehicle attitude during the entire leveling operation.

When managing uneven weight distribution, the controller can independently control the air flow rates to each corner through separate variable-flow valves while monitoring the vehicle's attitude using the ride height sensors. Rather than cycling valves on and off to equalize pressures between components, the variable-flow valves enable continuous, proportional control of air flow rates. This allows the controller to maintain vehicle balance by precisely regulating the air flow to each corner based on the feedback from the ride height sensors.

The controller can also implement different control profiles for various operating conditions. For example, during normal ride height adjustments, the controller may use a slower, more comfort-oriented profile with gradual transitions. For performance-oriented adjustments, the controller can implement more aggressive profiles while still maintaining vehicle stability through closed-loop control of each corner's height.

In some examples, the controller can implement both closed-loop control using ride height sensor feedback and open-loop control based on time, and/or predetermined timing profiles, and/or a departure or threshold distance to or from an original or target ride height and/or original or target geographic location. When operating in an open-loop mode for example, the controller may adjust the variable-flow valve positions according to predetermined time-based profiles that define how the flow rate should vary over the course of the leveling operation. For example, after initiating a leveling operation, the controller may gradually increase the valve opening over a first predetermined time period to smoothly transition from the original ride height, maintain a larger valve opening during a second time period to achieve faster height adjustment, and then gradually decrease the valve opening during a final time period to smoothly approach the target height.

The controller can select between closed-loop control using ride height feedback and open-loop control using predetermined timing profiles based on various operational factors. For example, open-loop timing-based control may be used during normal leveling operations where precise height control is less critical, while closed-loop control using ride height sensor feedback may be used for scenarios requiring more precise positioning. The variable-flow valves enable smooth transitions and controlled flow rates regardless of whether operating in open-loop or closed-loop control modes.

This flexible control approach recognizes the use of variable-flow valves that can be adjusted to different positions to control air flow rates, rather than being limited to only fully open or closed positions like conventional binary valves. The ability to control the valve positions, whether based on height feedback or predetermined timing profiles or distances, seeks to enable smooth height adjustments with reduced vertical jerk compared to conventional systems.

In some examples, the air suspension system 140 is designed to manage uneven weight distribution across the vehicle through continuous monitoring and adjustment. When uneven loading is detected, the variable-flow air valves 202 can independently adjust flow rates to different air springs, maintaining optimal vehicle balance without the stepwise changes typical in conventional systems.

For example, when heavy cargo creates an uneven weight distribution, the controller 256 can precisely regulate air flow through the rear right variable-flow air valve and rear left variable-flow air valve to the corresponding air springs, while simultaneously managing flow through the front variable-flow air valves to maintain proper vehicle attitude. This coordinated control enables smooth, continuous leveling adjustments rather than the "staggered leveling" effect seen in traditional systems.

In some examples, the valve block architecture of the air suspension system 140 facilitates precise weight management by allowing independent control of air flow to each corner of the vehicle through dedicated variable-flow air valves. The controller 256 receives input from ride height sensors to monitor the vehicle's position and can adjust the position of each valve independently to achieve optimal balance.

This capability may be helpful during dynamic loading changes, where conventional systems would need to cycle valves on and off periodically to maintain vehicle balance. Instead, the variable-flow air valves provide continuous adjustment of flow rates to different air springs, ensuring smooth transitions while maintaining proper vehicle attitude throughout the entire leveling operation.

In some examples, the controller 256 can implement different leveling profiles based on detected load conditions, allowing the system to respond appropriately to various weight distribution scenarios. This adaptive response ensures optimal vehicle positioning while maintaining occupant comfort through smooth transitions managed by the variable-flow air valves.

The controller 256 may implement different leveling profiles based on various operational factors. For example, when a user directly requests a ride height change through the driver interface and infotainment 116, the system may utilize a more responsive profile with a shorter middle phase to demonstrate that the adjustment is occurring promptly. Conversely, automatic adjustments based on vehicle speed or road conditions may employ a more gradual profile with extended slow phases to minimize occupant awareness of the change. The system may also select different profiles based on detected road roughness, vehicle location (such as approaching a known driveway or off-road section), or load condition changes.

In scenarios requiring precise vehicle positioning, such as when connecting to charging equipment or navigating low-clearance areas, the final slow phase may be extended to provide enhanced accuracy. Similarly, when the vehicle detects it is in an off-road environment requiring maximum ground clearance, the middle fast phase may be emphasized to achieve the necessary ride height quickly while still maintaining the comfort benefits of the controlled initial and final phases. Some examples integrate with vehicle-to-vehicle (V2V) or vehicle-to-infrastructure (V2I) communications to preemptively adjust ride height based on road conditions reported by other vehicles or infrastructure.

The S-shaped adjustment curve 304 also offers potential efficiency improvements. By avoiding the abrupt starts and stops of conventional systems, the variable-flow air valves 202 may reduce peak current demands on the vehicle's electrical system. Additionally, the proportional control of the valves potentially requires less current to maintain partially open states compared to fully open states in conventional solenoid valves, potentially improving overall system efficiency during leveling operations.

In summary, **FIG. 3** illustrates how the implementation of variable-flow air valves in the air suspension system transforms the ride height adjustment experience from an abrupt, potentially uncomfortable process to a smooth, controlled operation that enhances both occupant comfort and system performance. The S-shaped adjustment curve 304, with its characteristic slow-fast-slow phases, represents a significant advancement in air suspension technology that addresses multiple challenges present in conventional systems.

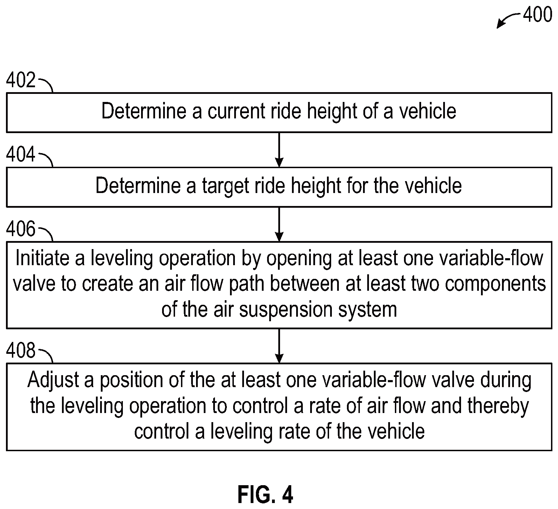

Some examples herein include methods. **FIG. 4** shows example operations in a method 400 for controlling vehicle ride height in an air suspension system, for example an air suspension system 140 of a vehicle 102.

Although the described flow diagram below can show operations as a sequential process, many of the operations can be performed in parallel or concurrently. In addition, the order of the operations may be rearranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

In operation 402, the method 400 determines a current ride height of a vehicle. In operation 404, the method 400 determines a target ride height for the vehicle. In operation 406, the method 400 initiates a leveling operation by opening at least one variable-flow air valve to create an air flow path between at least two components of the air suspension system. In operation 408, the method 400 adjusts a position of the at least one variable-flow air valve during the leveling operation to control a rate of air flow and thereby control a leveling rate of the vehicle.

The method may also include reducing the rate of air flow based on a detected approach of the current ride height to the target ride height by further adjusting the position of the at least one variable-flow air valve. The method may also include where reducing the rate of air flow includes gradually decreasing the rate of air flow to provide a smooth transition to the target ride height. The method may also include increasing the rate of air flow based on a detected departure of the current ride height from an original vehicle ride height by further adjusting the position of the at least one variable-flow air valve.

The method may also include detecting an uneven weight distribution in the vehicle and adjusting the position of the at least one variable-flow air valve to maintain a vehicle balance during the leveling operation. The method may also include where adjusting the position of the at least one variable-flow air valve includes controlling a current supplied to the at least one variable-flow air valve. The method may also include selecting a leveling profile for the air suspension system from a plurality of leveling profiles based on at least one of: a vehicle speed, a road surface detection, a vehicle location, a load condition change, and a user request. Other technical features may be readily apparent to one skilled in the art from the following figures, descriptions, and claims.

In some examples, the air suspension system can implement different leveling profiles based on direct user requests through the driver interface and infotainment system. When a user directly requests a ride height change, the system is configured to operate more responsively compared to automatic adjustments, demonstrating to the user that their requested adjustment is occurring. In some examples, the driver interface and infotainment system supports the driving experience by providing vehicle information through digital displays, allowing drivers to monitor and interact with vehicle systems including the air suspension system.

In some examples, the controller 256 can distinguish between automatic adjustments and direct user requests, implementing more subtle profiles for automatic adjustments while providing more responsive operation when the user directly requests a ride height change through the interface.

In some examples, the variable-flow air valves 202 can maintain vehicle stability during cornering or emergency maneuvers, and prioritize a ride height when different ride heights are requested by multiple vehicle systems simultaneously.

In certain aspects, a controller for a vehicle air suspension system, such as a controller 256, includes one or more processors. The controller also includes a memory storing instructions that, when executed by the processor, cause the controller to receive ride height information from one or more ride height sensors, determine a leveling operation to adjust a vehicle from a current ride height to a target ride height, control positions of a plurality of variable-flow air valves to establish air flow paths between components of the vehicle air suspension system, adjust one or more positions of the plurality of variable-flow air valves during the leveling operation to control air flow rates and thereby control leveling rates for different portions of the vehicle, and reduce the air flow rates as the vehicle approaches the target ride height by further adjusting the one or more positions of the plurality of variable-flow air valves.

In some examples, the variable-flow air valves 202 may be designed to efficiently use current and take advantage of pneumatic flow to pneumatically balance themselves. A technical challenge in implementing variable-flow air valves in air suspension systems involves designing valve architecture that minimizes the current needed to hold the valve at a desired position when there is a pressure differential across it. The valve design may incorporate features that allow the pressure of the flowing air to assist in maintaining the valve position, thereby reducing the power requirements of the system.

The variable-flow air valves 202 may be implemented using various technologies, including proportional solenoid valves, spool valves, stepper needle valves, or other valve types that allow for discrete or continuous position control. The specific valve architecture may be selected based on factors such as response time, precision, power consumption, and durability requirements.

The air suspension system 140 may implement different operational modes based on various vehicle conditions and user preferences. For example, when a direct user request to change ride height is received, the controller 256 may select a more responsive leveling profile to demonstrate system responsiveness. Conversely, for automatic adjustments based on vehicle speed or road conditions, the controller 256 may select a more subtle profile that minimizes occupant awareness of the change.

The system may also implement different leveling profiles based on the reason for adjustment, such as speed-based adjustments, road roughness compensation, location-based adjustments (such as saved locations where the vehicle is expected to raise), load-based adjustments, or direct user requests. Each profile may utilize different parameters for the initial slow phase, middle fast phase, and final slow phase of the S-shaped adjustment curve.

In some examples, the controller 256 implements these leveling profiles through controlled operation of the variable-flow air valves to create an S-shaped adjustment curve comprising three distinct phases. During the initial slow phase, the controller operates the variable-flow air valves at a partially open position to allow a gradual initiation of the ride height adjustment. This controlled departure from the original ride height reduces the initial vertical acceleration experienced by vehicle occupants, substantially eliminating the abrupt transition present in conventional systems.

As the adjustment progresses into the middle fast phase, the controller 256 increases the opening of the relevant variable-flow air valves, allowing increased air flow between components of the air suspension system. This increased flow rate accelerates the ride height adjustment during the middle portion of the operation, optimizing the overall adjustment time while maintaining comfort. During this phase, air may flow at higher rates between the air reservoir and the air springs through their respective variable-flow air valves.

Upon approaching the target ride height as detected by the ride height sensors, the controller initiates the final slow phase by gradually reducing the opening of the variable-flow air valves. This controlled deceleration creates a smooth transition to the target ride height, eliminating the abrupt stop evident in conventional systems. The gradual reduction in air flow rate allows the vehicle to settle gently into the target position, significantly improving occupant comfort by minimizing vertical jerk at the conclusion of the adjustment.

For scenarios involving uneven weight distribution, the controller implements specialized leveling profiles that enable continuous adjustment of flow rates to different air springs. This capability allows the controller to maintain vehicle balance without discrete changes by independently controlling multiple variable-flow air valves in the valve block. The valve block architecture facilitates this precise control through dedicated variable-flow air valves connected to each air spring, allowing different corners of the vehicle to adjust at varying rates while maintaining overall stability.

The air suspension system 140 may be helpful in handling uneven weight distribution across the electric vehicle 102. When the electric vehicle 102 carries heavy cargo in the rear, conventional systems using on/off solenoid valves must cycle the valves periodically to maintain vehicle balance during leveling, creating a "staggered leveling" effect with noticeable stepwise changes in ride height.

With the variable-flow air valves 202, the controller 256 can continuously and independently adjust the flow rates to each air spring, maintaining vehicle balance throughout the entire leveling operation without discrete changes. For example, if the rear of the electric vehicle 102 is heavily loaded, the controller 256 may provide higher flow rates to the rear air springs (208, 212) compared to the front air springs (206, 210) during a raising operation, ensuring the electric vehicle 102 remains reasonably level while adjusting height. This capability eliminates the need for multiple discrete leveling operations and provides a smoother, more comfortable experience for occupants of the electric vehicle 102.

### EXAMPLES

Some examples may include one or more of the following aspects.

Example 1 includes a vehicle air suspension system comprising: a plurality of air springs; a compressor; and one or more variable-flow air valves configured to control an air flow between at least one of the plurality of air springs and the compressor; wherein the one or more variable-flow air valves are adjustable discretely or variably to control a rate of the air flow, thereby controlling a leveling rate of a vehicle during a leveling operation.

Example 2 includes the vehicle air suspension system of example 1, wherein the one or more variable-flow air valves are configured to reduce the rate of the air flow based on a detected proximity to a target vehicle ride height.

Example 3 includes the vehicle air suspension system of example 2, wherein the detected proximity is associated with a detected approach to the target vehicle ride height.

Example 4 includes the vehicle air suspension system of example 2 or example 3, wherein the detected proximity is associated with a detected departure from an original vehicle ride height.

Example 5 includes the vehicle air suspension system of any one of examples 2-4, wherein the one or more variable-flow air valves are configured to increase the rate of the air flow based on at least one of: the detected proximity exceeding a threshold departure distance from the original vehicle ride height; or a time period elapsing from initiation of the leveling operation.

Example 6 includes the vehicle air suspension system of example 5, wherein the one or more variable-flow air valves are configured to provide a vehicle ride height adjustment between the original vehicle ride height and the target vehicle ride height based on an S-shaped vehicle ride height curve.

Example 7 includes the vehicle air suspension system of any one of examples 1-6, wherein the one or more variable-flow air valves comprise proportional valves controlled by a variable current, voltage, or power.

Example 8 includes the vehicle air suspension system of example 7, further comprising a controller, wherein the controller is configured to pneumatically rebalance the one or more variable-flow air valves to hold the one or more variable-flow air valves at a desired position or configuration based on a detected pressure differential across the one or more variable-flow air valves or the plurality of air springs.

Example 9 includes the vehicle air suspension system of example 8, wherein the controller is configured to pneumatically rebalance the one or more variable-flow air valves to minimize the variable current, voltage or power required to hold the one or more variable-flow air valves at the desired position or configuration.

Example 10 includes the vehicle air suspension system of any one of examples 1-9, further comprising a controller, wherein the controller is configured to maintain a vehicle balance during the leveling operation by controlling different air flow rates to different air springs.

Example 11 includes the vehicle air suspension system of any one of examples 1-10, further comprising a controller, wherein the controller is configured to control a vehicle leveling velocity or a vehicle leveling acceleration.

Example 12 includes the vehicle air suspension system of any one of examples 1-11, further comprising a controller, wherein the controller is configured to adjust the rate of the air flow based on at least one of: a vehicle speed, a road roughness, a vehicle location, a vehicle load condition, and a user request.

Example 13 includes the vehicle air suspension system of any one of examples 1-12, further comprising an air reservoir, and wherein the one or more variable-flow air valves are configured to control an air flow between at least two of the plurality of air springs, the compressor, and the air reservoir.

Example 14 includes the vehicle air suspension system of any one of examples 1-13, wherein the one or more variable-flow air valves are included in a valve block.

Example 15 includes a method for controlling vehicle ride height in an air suspension system, the method comprising: determining a current ride height of a vehicle; determining a target ride height for the vehicle; initiating a leveling operation by opening at least one variable-flow air valve to create an air flow path between at least two components of the air suspension system; and adjusting a position of the at least one variable-flow air valve during the leveling operation to control a rate of air flow and thereby control a leveling rate of the vehicle.

Example 16 includes the method of example 15, further comprising reducing the rate of air flow based on a detected approach of the current ride height to the target ride height by further adjusting the position of the at least one variable-flow air valve.

Example 17 includes the method of example 16, wherein reducing the rate of air flow comprises gradually decreasing the rate of air flow to provide a smooth transition to the target ride height.

Example 18 includes the method of any one of examples 15-17, further comprising increasing the rate of air flow based on a detected departure of the current ride height from an original vehicle ride height by further adjusting the position of the at least one variable-flow air valve.

Example 19 includes the method of any one of examples 15-18, further comprising: detecting an uneven weight distribution in the vehicle; and adjusting the position of the at least one variable-flow air valve to maintain a vehicle balance during the leveling operation.

Example 20 includes the method of any one of examples 15-19, wherein adjusting the position of the at least one variable-flow air valve comprises controlling a current, voltage, or power supplied to the at least one variable-flow air valve.

Example 21 includes the method of any one of examples 15-20, further comprising selecting a leveling profile for the air suspension system from a plurality of leveling profiles based on at least one of: a vehicle speed, a road surface detection, a vehicle location, a load condition change, and a user request.

Example 22 includes a controller for a vehicle air suspension system comprising: a processor; and a memory storing instructions that, when executed by the processor, cause the controller to: receive vehicle data from a vehicle sensor, the vehicle data including ride height information from one or more ride height sensors; determine a leveling operation to adjust a vehicle from a current ride height to a target ride height; control positions of a plurality of variable-flow air valves to establish air flow paths between components of the vehicle air suspension system; adjust one or more positions of the plurality of variable-flow air valves during the leveling operation to control air flow rates and thereby control leveling rates for different portions of the vehicle; and reduce the air flow rates as the vehicle approaches the target ride height by further adjusting the one or more positions of the plurality of variable-flow air valves.

It should be noted that the description and the figures above merely illustrate the principles of the present subject matter along with examples described herein and should not be construed as a limitation to the present subject matter. It is thus understood that various arrangements may be devised that although not explicitly described or shown herein, embody the principles of the present subject matter. Moreover, all statements herein reciting principles, aspects, and implementations of the present subject matter, as well as specific examples thereof, are intended to encompass equivalents thereof.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

Although the described flow diagrams herein can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the safety systems.

Conditional language such as, among others, "can," "could," "might" or "may," unless specifically stated otherwise, are understood within the context as used in general to convey that some examples include, while other examples do not include, some features, elements and/or steps. Thus, such conditional language is not generally intended to imply that features, elements and/or steps are in any way necessary for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

It should be emphasized that many variations and modifications may be made to the above-described examples, the elements of which are to be understood as being among other acceptable examples. All such modifications and variations are intended to be included herein within the scope of this disclosure.

Unless otherwise explicitly stated, articles such as "a" or "an" should generally be interpreted to include one or more described items. It will also be appreciated that one or more of the elements depicted in the drawings/figures can also be implemented in a more separated or integrated manner, or even removed or rendered as inoperable in certain cases, as is useful in accordance with a particular application.

Thus, while the above is a detailed description of some examples of the inventive subject matter, various alternatives, modifications, and equivalents may be used. Therefore, the above description should not be taken as limiting the scope of the inventive subject matter which is defined by the appended claims.

## Claims

1. A vehicle air suspension system comprising:
a plurality of air springs;
a compressor; and
one or more variable-flow air valves configured to control an air flow between at least one of the plurality of air springs and the compressor;
wherein the one or more variable-flow air valves are adjustable discretely or variably to control a rate of the air flow, thereby controlling a leveling rate of a vehicle during a leveling operation.

2. The vehicle air suspension system of claim 1, wherein the one or more variable-flow air valves are configured to reduce the rate of the air flow based on a detected proximity to a target vehicle ride height.

3. The vehicle air suspension system of claim 2, wherein the detected proximity is associated with a detected approach to the target vehicle ride height.

4. The vehicle air suspension system of claim 2, wherein the detected proximity is associated with a detected departure from an original vehicle ride height.

5. The vehicle air suspension system of claim 4, wherein the one or more variable-flow air valves are configured to increase the rate of the air flow based on at least one of:
the detected proximity exceeding a threshold departure distance from the original vehicle ride height; or
a time period elapsing from initiation of the leveling operation.

6. The vehicle air suspension system of claim 5, wherein the one or more variable-flow air valves are configured to provide a vehicle ride height adjustment between the original vehicle ride height and the target vehicle ride height based on an S-shaped vehicle ride height curve.

7. The vehicle air suspension system of any one of the preceding claims, wherein the one or more variable-flow air valves comprise proportional valves controlled by a variable current, voltage, or power.

8. The vehicle air suspension system of claim 7, further comprising a controller, wherein the controller is configured to pneumatically rebalance the one or more variable-flow air valves to hold the one or more variable-flow air valves at a desired position or configuration based on a detected pressure differential across the one or more variable-flow air valves or the plurality of air springs.

9. The vehicle air suspension system of claim 8, wherein the controller is configured to pneumatically rebalance the one or more variable-flow air valves to minimize the variable current, voltage or power required to hold the one or more variable-flow air valves at the desired position or configuration.

10. The vehicle air suspension system of any one of the preceding claims, further comprising a controller, wherein the controller is configured to maintain a vehicle balance during the leveling operation by controlling different air flow rates to different air springs.

11. The vehicle air suspension system of any one of the preceding claims, further comprising a controller, wherein the controller is configured to control a vehicle leveling velocity or a vehicle leveling acceleration; or optionally
further comprising a controller, wherein the controller is configured to adjust the rate of the air flow based on at least one of: a vehicle speed, a road roughness, a vehicle location, a vehicle load condition, and a user request; or optionally
further comprising an air reservoir, and wherein the one or more variable-flow air valves are configured to control an air flow between at least two of the plurality of air springs, the compressor, and the air reservoir; or optionally
wherein the one or more variable-flow air valves are included in a valve block.

12. A method for controlling vehicle ride height in an air suspension system, the method comprising:
determining a current ride height of a vehicle;
determining a target ride height for the vehicle;
initiating a leveling operation by opening at least one variable-flow air valve to create an air flow path between at least two components of the air suspension system; and
adjusting a position of the at least one variable-flow air valve during the leveling operation to control a rate of air flow and thereby control a leveling rate of the vehicle.

13. The method of claim 12, further comprising reducing the rate of air flow based on a detected approach of the current ride height to the target ride height by further adjusting the position of the at least one variable-flow air valve; and optionally
wherein reducing the rate of air flow comprises gradually decreasing the rate of air flow to provide a smooth transition to the target ride height.

14. The method of claim 12, further comprising increasing the rate of air flow based on a detected departure of the current ride height from an original vehicle ride height by further adjusting the position of the at least one variable-flow air valve; or optionally
further comprising:
detecting an uneven weight distribution in the vehicle; and
adjusting the position of the at least one variable-flow air valve to maintain a vehicle balance during the leveling operation; or optionally
wherein adjusting the position of the at least one variable-flow air valve comprises controlling a current, voltage, or power supplied to the at least one variable-flow air valve.; or optionally
further comprising selecting a leveling profile for the air suspension system from a plurality of leveling profiles based on at least one of: a vehicle speed, a road surface detection, a vehicle location, a load condition change, and a user request.

15. A controller for a vehicle air suspension system comprising:
a processor; and
a memory storing instructions that, when executed by the processor, cause the controller to:
receive vehicle data from a vehicle sensor, the vehicle data including ride height information from one or more ride height sensors;
determine a leveling operation to adjust a vehicle from a current ride height to a target ride height;
control positions of a plurality of variable-flow air valves to establish air flow paths between components of the vehicle air suspension system;
adjust one or more positions of the plurality of variable-flow air valves during the leveling operation to control air flow rates and thereby control leveling rates for different portions of the vehicle; and
reduce the air flow rates as the vehicle approaches the target ride height by further adjusting the one or more positions of the plurality of variable-flow air valves.
